# EUROPEAN PATENT SPECIFICATION

(11) **EP 3 777 311 B1**
(45) Date of publication and mention of the grant of the patent: **28.06.2023**
(21) Application number: 19781881.8
(22) Date of filing: 14.02.2019
(51) Int. Cl.: H04L 69/321, H04L 47/34, H04L 69/324, H04W 8/04

(54) **METHOD AND APPARATUS FOR TRANSMITTING SIGNALS BY TM RLC ENTITY OF TRANSMISSION END IN WIRELESS COMMUNICATION SYSTEM**
VERFAHREN UND VORRICHTUNG ZUR ÜBERTRAGUNG VON SIGNALEN DURCH EINE TM-RLC-INSTANZ EINES ÜBERTRAGUNGSENDES IN EINEM DRAHTLOSEN KOMMUNIKATIONSSYSTEM
PROCÉDÉ ET APPAREIL D'ÉMISSION DE SIGNAUX AU MOYEN D'UNE ENTITÉ RLC TM D'UNE EXTRÉMITÉ D'ÉMISSION DANS UN SYSTÈME DE COMMUNICATION SANS FIL

(30) Priority: 03.04.2018 KR 20180038539
(43) Date of publication of application: 17.02.2021
(73) Proprietor: LG Electronics Inc., 07336 SEOUL (KR)
(72) Inventor: YI, Seungjune, Seoul 06772 (KR); LEE, Sunyoung, Seoul 06772 (KR)
(74) Representative: Frenkel, Matthias Alexander
(86) International application number: PCT/KR2019/001794
(87) International publication number: WO 2019/194408

(56) References cited:
- EP-A1- 1 720 322
- US-A1- 2014 064 192
- US-A1- 2014 161 039
- US-A1- 2016 127 939
- US-A1- 2017 195 464
- US-B2- 7 675 941
- US-B2- 8 619 770
- US-B2- 9 392 490

## Description

### Technical Field

The present invention relates to a wireless communication system. Especially, the present invention relates to transmitting signals by a Transparent Mode (TM) Radio Link Control (RLC) entity of a transmission end in a wireless communication system.

### Background Art

Introduction of new radio communication technologies has led to increases in the number of user equipments (UEs) to which a base station (BS) provides services in a prescribed resource region, and has also led to increases in the amount of data and control information that the BS transmits to the UEs. Due to typically limited resources available to the BS for communication with the UE(s), new techniques are needed by which the BS utilizes the limited radio resources to efficiently receive/transmit uplink/downlink data and/or uplink/downlink control information. In particular, overcoming delay or latency has become an important challenge in applications whose performance critically depends on delay/latency.

US 2016/127393 A1 discloses that a resource determiner may provide a maximum data packet size to a status report generator for generating a status report. In an aspect, since the maximum data packet size is limited by an uplink grant and may be divided among multiple bearers, a size of the status report may be limited.

EP 1 720 322 A1 discloses that a RLC layer constructs a RLC PDU without inserting information indicating the start and end of a SDU or indicating the use or non-use of padding. The RLC layer sets a LI in a header to indicate inclusion of an intermediate SDU segment in the data field of the RLC PDU. Therefore, the resulting decrease of overhead arising from packet transmission facilitates the efficient use of limited radio resources.

### Disclosure of Invention

### Technical Problem

Accordingly, an object of the present invention is to provide a method of transmitting signals by a Transparent Mode (TM) Radio Link Control (RLC) entity of a transmission end in a wireless communication system and apparatus therefore.

### Solution to Problem

The object of the present invention can be achieved by transmitting signals by a Medium Access Control (MAC) entity of a transmission end in a wireless communication system including: receiving, from an upper layer, information about sizes of service data units (SDUs) stored in the upper layer; selecting at least one SDU of the SDUs by considering an uplink grant and the sizes of SDUs; transmitting information about the at least one selected SDU to the upper layer; receiving the at least one selected SDU from the upper layer; generating a MAC protocol data unit (PDU) including the at least one selected SDU; and transmitting the MAC PDU to a reception end.

Further, it is suggested a transmission end in a wireless communication system comprising a memory; andat least one processor coupled to the memory and configured to control a Medium Access Control (MAC) entity of the transmission end to: receive, from an upper layer, information about sizes of service data units (SDUs) stored in the upper layer; select at least one SDU of the SDUs by considering an uplink grant and the sizes of SDUs; transmit information about the at least one selected SDU to the upper layer; receive the at least one selected SDU from the upper layer; generate a MAC protocol data unit (PDU) including the at least one selected SDU; and transmit the MAC PDU to a reception end.

Preferably, the at least one selected SDU is received without adding a header and segmenting by the upper layer.

Preferably, if a number of the at least one selected SDU is two or more, the at least one selected SDU is received from the upper layer in an order received at the upper layer from a Packet Data Convergence Protocol (PDCP) layer.

In accordance with another aspect of the present invention, a method for transmitting signals by a Transparent Mode (TM) Radio Link Control (RLC) entity of a transmission end in a wireless communication system comprises receiving data units from a Packet Data Convergence Protocol (PDCP) layer; storing the data units in a buffer; transmitting, to a Medium Access Control (MAC) layer, information about sizes of the data units; receiving, from the MAC layer, information about at least one data unit among the data units; transmitting, to the MAC layer, the at least one data unit.

Preferably, if a number of the at least one data unit is two or more, the at least one data unit is transmitted to the MAC layer in an order received from the PDCP layer.

Preferably, the at least one data unit is selected unit among the data units based on an uplink grant and the sizes of the data units by the MAC layer. In this case, the data units except for the selected at least one data unit are maintained in the buffer.

### Advantageous Effects of Invention

According to the aforementioned embodiments of the present invention, a radio bearer (RB) using RLC TM can be supported efficiently.

Effects obtainable from the present invention may be non-limited by the above mentioned effect. And, other unmentioned effects can be clearly understood from the following description by those having ordinary skill in the technical field to which the present invention pertains.

### Brief Description of Drawings

FIG. 1 is a diagram illustrating an example of a network structure of an evolved universal mobile telecommunication system (E-UMTS) as an exemplary radio communication system;
FIG. 2 is a block diagram illustrating an example of an evolved universal terrestrial radio access network (E-UTRAN);
FIG. 3 is a block diagram depicting an example of an architecture of a typical E-UTRAN and a typical EPC;
FIG. 4 is a diagram showing an example of a control plane and a user plane of a radio interface protocol between a UE and an E-UTRAN based on a 3GPP radio access network standard;
FIG. 5 is a diagram showing an example of a physical channel structure used in an E-UMTS system;
FIG. 6 illustrates an example of protocol stacks of a next generation wireless communication system;
FIG. 7 illustrates an example of a data flow example at a transmitting device in the NR system;
FIG. 8 illustrates an example of a slot structure available in a new radio access technology (NR);
FIG. 9 shows an example about transmitting side operation of RB using TM RLC according to an embodiment of the present invention.
FIG. 10 shows an example about receiving side operation of RB using TM RLC according to an embodiment of the present invention.
FIG. 11 is a block diagram illustrating an example of elements of a transmitting device 100 and a receiving device 200 according to some implementations of the present disclosure.

### Best Mode for Carrying out the Invention

The technical objects that can be achieved through the present disclosure are not limited to what has been particularly described hereinabove and other technical objects not described herein will be more clearly understood by persons skilled in the art from the following detailed description.

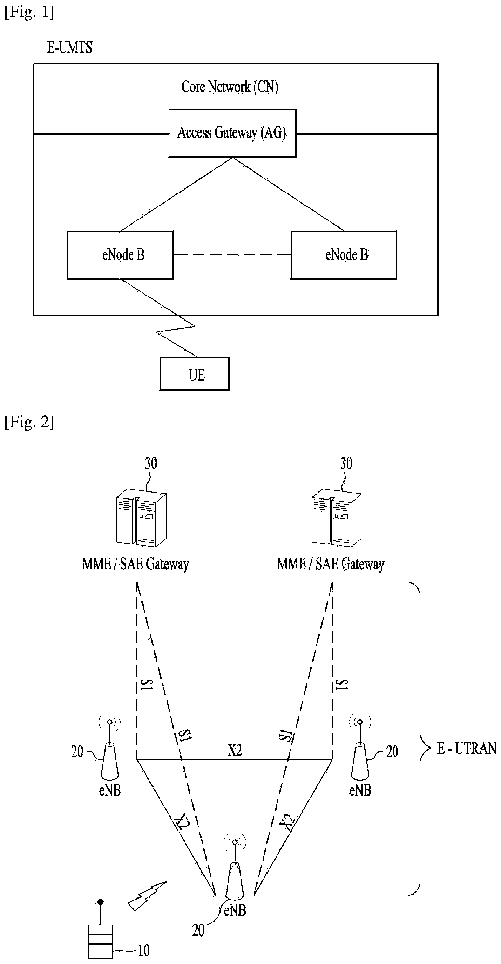

FIG. 1 is a diagram illustrating an example of a network structure of an E-UMTS as an exemplary radio communication system. An Evolved Universal Mobile Telecommunications System (E-UMTS) is an advanced version of a Universal Mobile Telecommunications System (UMTS) and basic standardization thereof is currently underway in the 3GPP. E-UMTS may be generally referred to as a Long Term Evolution (LTE) system. For details of the technical specifications of the UMTS and E-UMTS, reference can be made to Release 7 and Release 8 of "3rd Generation Partnership Project; Technical Specification Group Radio Access Network".

Referring to FIG. 1, the E-UMTS includes a User Equipment (UE), eNode Bs (eNBs), and an Access Gateway (AG) which is located at an end of the network (E-UTRAN) and connected to an external network. The eNBs may simultaneously transmit multiple data streams for a broadcast service, a multicast service, and/or a unicast service.

One or more cells may exist per eNB. The cell is set to operate in one of bandwidths such as 1.25, 2.5, 5, 10, 15, and 20 MHz and provides a downlink (DL) or uplink (UL) transmission service to a plurality of UEs in the bandwidth. Different cells may be set to provide different bandwidths. The eNB controls data transmission or reception to and from a plurality of UEs. The eNB transmits DL scheduling information of DL data to a corresponding UE so as to inform the UE of a time/frequency domain in which the DL data is supposed to be transmitted, coding, a data size, and hybrid automatic repeat and request (HARQ)-related information. In addition, the eNB transmits UL scheduling information of UL data to a corresponding UE so as to inform the UE of a time/frequency domain which may be used by the UE, coding, a data size, and HARQ-related information. An interface for transmitting user traffic or control traffic may be used between eNBs. A core network (CN) may include the AG and a network node or the like for user registration of UEs. The AG manages the mobility of a UE on a tracking area (TA) basis. One TA includes a plurality of cells.

Although wireless communication technology has been developed to LTE based on wideband code division multiple access (WCDMA), the demands and expectations of users and service providers are on the rise. In addition, considering other radio access technologies under development, new technological evolution is required to secure high competitiveness in the future. Decrease in cost per bit, increase in service availability, flexible use of frequency bands, a simplified structure, an open interface, appropriate power consumption of UEs, and the like are required.

As more and more communication devices demand larger communication capacity, there is a need for improved mobile broadband communication compared to existing RAT. Also, massive machine type communication (MTC), which provides various services by connecting many devices and objects, is one of the major issues to be considered in the next generation communication. In addition, a communication system design considering a service/UE sensitive to reliability and latency is being discussed. The introduction of next-generation RAT, which takes into account such advanced mobile broadband communication, massive MTC (mMCT), and ultra-reliable and low latency communication (URLLC), is being discussed.

Reference will now be made in detail to the exemplary implementations of the present disclosure, examples of which are illustrated in the accompanying drawings. The detailed description, which will be given below with reference to the accompanying drawings, is intended to explain exemplary implementations of the present disclosure, rather than to show the only implementations that can be implemented according to the disclosure. The following detailed description includes specific details in order to provide a thorough understanding of the present disclosure. However, it will be apparent to those skilled in the art that the present disclosure may be practiced without such specific details.

The following techniques, apparatuses, and systems may be applied to a variety of wireless multiple access systems. Examples of the multiple access systems include a code division multiple access (CDMA) system, a frequency division multiple access (FDMA) system, a time division multiple access (TDMA) system, an orthogonal frequency division multiple access (OFDMA) system, a single carrier frequency division multiple access (SC-FDMA) system, and a multicarrier frequency division multiple access (MC-FDMA) system. CDMA may be embodied through radio technology such as universal terrestrial radio access (UTRA) or CDMA2000. TDMA may be embodied through radio technology such as global system for mobile communications (GSM), general packet radio service (GPRS), or enhanced data rates for GSM evolution (EDGE). OFDMA may be embodied through radio technology such as institute of electrical and electronics engineers (IEEE) 802.11 (Wi-Fi), IEEE 802.16 (WiMAX), IEEE 802.20, or evolved UTRA (E-UTRA). UTRA is a part of a universal mobile telecommunications system (UMTS). 3rd generation partnership project (3GPP) long term evolution (LTE) is a part of evolved UMTS (E-UMTS) using E-UTRA. 3GPP LTE employs OFDMA in DL and SC-FDMA in UL. LTE-advanced (LTE-A) is an evolved version of 3GPP LTE. For convenience of description, implementations of the present disclosure are described in regards to a 3GPP based wireless communication system. However, the technical features of the present disclosure are not limited thereto. For example, although the following detailed description is given based on a mobile communication system corresponding to a 3GPP based system, aspects of the present disclosure that are not limited to 3GPP based system are applicable to other mobile communication systems.

For example, the present disclosure is applicable to contention based communication such as Wi-Fi as well as non-contention based communication as in the 3GPP based system in which a BS allocates a DL/UL time/frequency resource to a UE and the UE receives a DL signal and transmits a UL signal according to resource allocation of the BS. In a non-contention based communication scheme, an access point (AP) or a control node for controlling the AP allocates a resource for communication between the UE and the AP, whereas, in a contention based communication scheme, a communication resource is occupied through contention between UEs which desire to access the AP. The contention based communication scheme will now be described in brief. One type of the contention based communication scheme is carrier sense multiple access (CSMA). CSMA refers to a probabilistic media access control (MAC) protocol for confirming, before a node or a communication device transmits traffic on a shared transmission medium (also called a shared channel) such as a frequency band, that there is no other traffic on the same shared transmission medium. In CSMA, a transmitting device determines whether another transmission is being performed before attempting to transmit traffic to a receiving device. In other words, the transmitting device attempts to detect presence of a carrier from another transmitting device before attempting to perform transmission. Upon sensing the carrier, the transmitting device waits for another transmission device which is performing transmission to finish transmission, before performing transmission thereof. Consequently, CSMA can be a communication scheme based on the principle of "sense before transmit" or "listen before talk". A scheme for avoiding collision between transmitting devices in the contention based communication system using CSMA includes carrier sense multiple access with collision detection (CSMA/CD) and/or carrier sense multiple access with collision avoidance (CSMA/CA). CSMA/CD is a collision detection scheme in a wired local area network (LAN) environment. In CSMA/CD, a personal computer (PC) or a server which desires to perform communication in an Ethernet environment first confirms whether communication occurs on a network and, if another device carries data on the network, the PC or the server waits and then transmits data. That is, when two or more users (e.g. PCs, UEs, etc.) simultaneously transmit data, collision occurs between simultaneous transmission and CSMA/CD is a scheme for flexibly transmitting data by monitoring collision. A transmitting device using CSMA/CD adjusts data transmission thereof by sensing data transmission performed by another device using a specific rule. CSMA/CA is a MAC protocol specified in IEEE 802.11 standards. A wireless LAN (WLAN) system conforming to IEEE 802.11 standards does not use CSMA/CD which has been used in IEEE 802.3 standards and uses CA, i.e. a collision avoidance scheme. Transmission devices always sense carrier of a network and, if the network is empty, the transmission devices wait for determined time according to locations thereof registered in a list and then transmit data. Various methods are used to determine priority of the transmission devices in the list and to reconfigure priority. In a system according to some versions of IEEE 802.11 standards, collision may occur and, in this case, a collision sensing procedure is performed. A transmission device using CSMA/CA avoids collision between data transmission thereof and data transmission of another transmission device using a specific rule.

In the present disclosure, a user equipment (UE) may be a fixed or mobile device. Examples of the UE include various devices that transmit and receive user data and/or various kinds of control information to and from a base station (BS). The UE may be referred to as a terminal equipment (TE), a mobile station (MS), a mobile terminal (MT), a user terminal (UT), a subscriber station (SS), a wireless device, a personal digital assistant (PDA), a wireless modem, a handheld device, etc. In addition, in the present disclosure, a BS generally refers to a fixed station that performs communication with a UE and/or another BS, and exchanges various kinds of data and control information with the UE and another BS. The BS may be referred to as an advanced base station (ABS), a node-B (NB), an evolved node-B (eNB), a base transceiver system (BTS), an access point (AP), a processing server (PS), etc. Especially, a BS of the UMTS is referred to as a NB, a BS of the EPC/LTE is referred to as an eNB, and a BS of the new radio (NR) system is referred to as a gNB.

In the present disclosure, a node refers to a fixed point capable of transmitting/ receiving a radio signal through communication with a UE. Various types of BSs may be used as nodes irrespective of the terms thereof. For example, a BS, a node B (NB), an e-node B (eNB), a pico-cell eNB (PeNB), a home eNB (HeNB), a relay, a repeater, etc. may be a node. In addition, the node may not be a BS. For example, the node may be a radio remote head (RRH) or a radio remote unit (RRU). The RRH or RRU generally has a lower power level than a power level of a BS. Since the RRH or RRU (hereinafter, RRH/RRU) is generally connected to the BS through a dedicated line such as an optical cable, cooperative communication between RRH/RRU and the BS can be smoothly performed in comparison with cooperative communication between BSs connected by a radio line. At least one antenna is installed per node. The antenna may include a physical antenna or an antenna port or a virtual antenna.

In the present disclosure, a cell refers to a prescribed geographical area to which one or more nodes provide a communication service. Accordingly, in the present disclosure, communicating with a specific cell may include communicating with a BS or a node which provides a communication service to the specific cell. In addition, a DL/UL signal of a specific cell refers to a DL/UL signal from/to a BS or a node which provides a communication service to the specific cell. A node providing UL/DL communication services to a UE is called a serving node and a cell to which UL/DL communication services are provided by the serving node is especially called a serving cell.

In some scenarios, a 3GPP based system implements a cell to manage radio resources and a cell associated with the radio resources is distinguished from a cell of a geographic region.

A "cell" of a geographic region may be understood as coverage within which a node can provide service using a carrier and a "cell" of a radio resource is associated with bandwidth (BW) which is a frequency range configured by the carrier. Since DL coverage, which is a range within which the node is capable of transmitting a valid signal, and UL coverage, which is a range within which the node is capable of receiving the valid signal from the UE, depends upon a carrier carrying the signal, the coverage of the node may be associated with coverage of the "cell" of a radio resource used by the node. Accordingly, the term "cell" may be used to indicate service coverage of the node sometimes, a radio resource at other times, or a range that a signal using a radio resource can reach with valid strength at other times.

In some scenarios, the recent 3GPP based wireless communication standard implements a cell to manage radio resources. The "cell" associated with the radio resources utilizes a combination of downlink resources and uplink resources, for example, a combination of DL component carrier (CC) and UL CC. The cell may be configured by downlink resources only, or may be configured by downlink resources and uplink resources. If carrier aggregation is supported, linkage between a carrier frequency of the downlink resources (or DL CC) and a carrier frequency of the uplink resources (or UL CC) may be indicated by system information. For example, combination of the DL resources and the UL resources may be indicated by linkage of system information block type 2 (SIB2). In this case, the carrier frequency may be a center frequency of each cell or CC. A cell operating on a primary frequency may be referred to as a primary cell (Pcell) or PCC, and a cell operating on a secondary frequency may be referred to as a secondary cell (Scell) or SCC. The carrier corresponding to the Pcell on downlink will be referred to as a downlink primary CC (DL PCC), and the carrier corresponding to the Pcell on uplink will be referred to as an uplink primary CC (UL PCC). A Scell refers to a cell that may be configured after completion of radio resource control (RRC) connection establishment and used to provide additional radio resources. The Scell may form a set of serving cells for the UE together with the Pcell in accordance with capabilities of the UE. The carrier corresponding to the Scell on the downlink will be referred to as downlink secondary CC (DL SCC), and the carrier corresponding to the Scell on the uplink will be referred to as uplink secondary CC (UL SCC). Although the UE is in RRC-CONNECTED state, if it is not configured by carrier aggregation or does not support carrier aggregation, a single serving cell configured by the Pcell only exists.

In the present disclosure, "PDCCH" refers to a PDCCH, an EPDCCH (in subframes when configured), a MTC PDCCH (MPDCCH), for an RN with R-PDCCH configured and not suspended, to the R-PDCCH or, for NB-IoT to the narrowband PDCCH (NPDCCH).

In the present disclosure, monitoring a channel refers to attempting to decode the channel. For example, monitoring a PDCCH refers to attempting to decode PDCCH(s) (or PDCCH candidates).

For terms and technologies which are not specifically described among the terms of and technologies employed in this specification, 3GPP LTE/LTE-A standard documents, for example, 3GPP TS 36.211, 3GPP TS 36.212, 3GPP TS 36.213, 3GPP TS 36.300, 3GPP TS 36.321, 3GPP TS 36.322, 3GPP TS 36.323 and 3GPP TS 36.331, and 3GPP NR standard documents, for example, 3GPP TS 38.211, 3GPP TS 38.213, 3GPP TS 38.214, 3GPP TS 38.300, 3GPP TS 38.321, 3GPP TS 38.322, 3GPP TS 38.323 and 3GPP TS 38.331 may be referenced.

FIG. 2 is a block diagram illustrating an example of an evolved universal terrestrial radio access network (E-UTRAN). The E-UMTS may be also referred to as an LTE system. The communication network is widely deployed to provide a variety of communication services such as voice (VoIP) through IMS and packet data.

As illustrated in FIG. 2, the E-UMTS network includes an evolved UMTS terrestrial radio access network (E-UTRAN), an Evolved Packet Core (EPC) and one or more user equipment. The E-UTRAN may include one or more evolved NodeB (eNodeB) 20, and a plurality of user equipments (UE) 10 may be located in one cell. One or more E-UTRAN mobility management entity (MME)/system architecture evolution (SAE) gateways 30 may be positioned at the end of the network and connected to an external network.

As used herein, "downlink" refers to communication from BS 20 to UE 10, and "uplink" refers to communication from the UE to a BS.

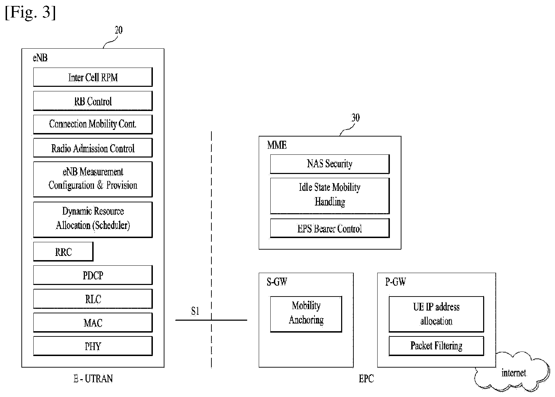

FIG. 3 is a block diagram depicting an example of an architecture of a typical E-UTRAN and a typical EPC.

As illustrated in FIG. 3, an eNB 20 provides end points of a user plane and a control plane to the UE 10. MME/SAE gateway 30 provides an end point of a session and mobility management function for UE 10. The eNB and MME/SAE gateway may be connected via an S1 interface.

The eNB 20 is generally a fixed station that communicates with a UE 10, and may also be referred to as a base station (BS) or an access point. One eNB 20 may be deployed per cell. An interface for transmitting user traffic or control traffic may be used between eNBs 20.

The MME provides various functions including NAS signaling to eNBs 20, NAS signaling security, access stratum (AS) Security control, Inter CN node signaling for mobility between 3GPP access networks, Idle mode UE Reachability (including control and execution of paging retransmission), Tracking Area list management (for UE in idle and active mode), PDN GW and Serving GW selection, MME selection for handovers with MME change, SGSN selection for handovers to 2G or 3G 3GPP access networks, roaming, authentication, bearer management functions including dedicated bearer establishment, support for PWS (which includes ETWS and CMAS) message transmission. The SAE gateway host provides assorted functions including Per-user based packet filtering (by e.g. deep packet inspection), Lawful Interception, UE IP address allocation, Transport level packet marking in the downlink, UL and DL service level charging, gating and rate enforcement, DL rate enforcement based on APN-AMBR. For clarity MME/SAE gateway 30 will be referred to herein simply as a "gateway," but it is understood that this entity includes both an MME and an SAE gateway.

A plurality of nodes may be connected between eNB 20 and gateway 30 via the S1 interface. The eNBs 20 may be connected to each other via an X2 interface and neighboring eNBs may have a meshed network structure that has the X2 interface.

As illustrated, eNB 20 may perform functions of selection for gateway 30, routing toward the gateway during a Radio Resource Control (RRC) activation, scheduling and transmitting of paging messages, scheduling and transmitting of Broadcast Channel (BCCH) information, dynamic allocation of resources to UEs 10 in both uplink and downlink, configuration and provisioning of eNB measurements, radio bearer control, radio admission control (RAC), and connection mobility control in LTE_ACTIVE state. In the EPC, and as noted above, gateway 30 may perform functions of paging origination, LTE-IDLE state management, ciphering of the user plane, System Architecture Evolution (SAE) bearer control, and ciphering and integrity protection of Non-Access Stratum (NAS) signaling.

The EPC includes a mobility management entity (MME), a serving-gateway (S-GW), and a packet data network-gateway (PDN-GW). The MME has information about connections and capabilities of UEs, mainly for use in managing the mobility of the UEs. The S-GW is a gateway having the E-UTRAN as an end point, and the PDN-GW is a gateway having a packet data network (PDN) as an end point.

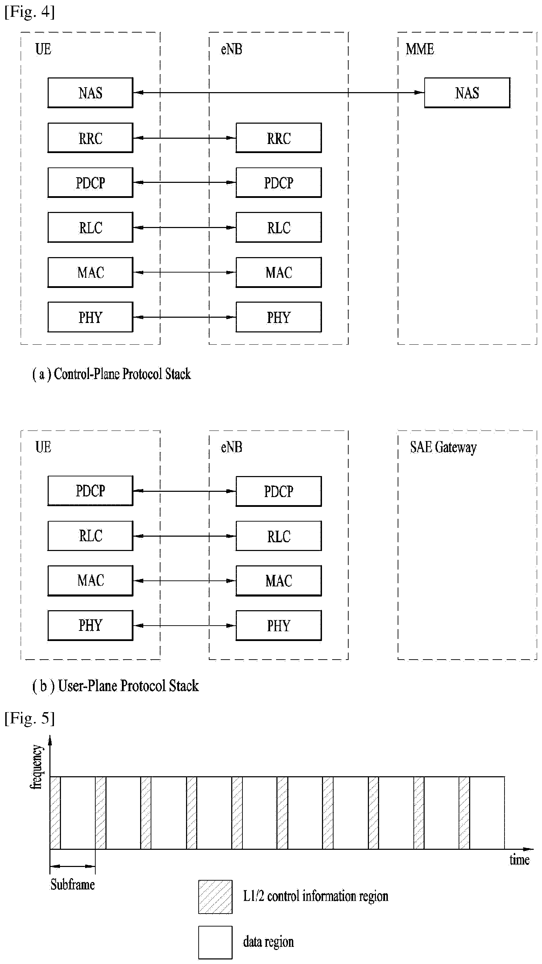

FIG. 4 is a diagram showing an example of a control plane and a user plane of a radio interface protocol between a UE and an E-UTRAN based on a 3GPP radio access network standard. The control plane refers to a path used for transmitting control messages used for managing a call between the UE and the E-UTRAN. The user plane refers to a path used for transmitting data generated in an application layer, e.g., voice data or Internet packet data.

Layer 1 (i.e. L1) of the 3GPP LTE/LTE-A system is corresponding to a physical layer. A physical (PHY) layer of a first layer (Layer 1 or L1) provides an information transfer service to a higher layer using a physical channel. The PHY layer is connected to a medium access control (MAC) layer located on the higher layer via a transport channel. Data is transported between the MAC layer and the PHY layer via the transport channel. Data is transported between a physical layer of a transmitting side and a physical layer of a receiving side via physical channels. The physical channels use time and frequency as radio resources. In detail, the physical channel is modulated using an orthogonal frequency division multiple access (OFDMA) scheme in downlink and is modulated using a single carrier frequency division multiple access (SC-FDMA) scheme in uplink.

Layer 2 (i.e. L2) of the 3GPP LTE/LTE-A system is split into the following sublayers: Medium Access Control (MAC), Radio Link Control (RLC) and Packet Data Convergence Protocol (PDCP). The MAC layer of a second layer (Layer 2 or L2) provides a service to a radio link control (RLC) layer of a higher layer via a logical channel. The RLC layer of the second layer supports reliable data transmission. A function of the RLC layer may be implemented by a functional block of the MAC layer. A packet data convergence protocol (PDCP) layer of the second layer performs a header compression function to reduce unnecessary control information for efficient transmission of an Internet protocol (IP) packet such as an IP version 4 (IPv4) packet or an IP version 6 (IPv6) packet in a radio interface having a relatively small bandwidth.

The main services and functions of the MAC sublayer include: mapping between logical channels and transport channels; multiplexing/demultiplexing of MAC SDUs belonging to one or different logical channels into/from transport blocks (TB) delivered to/from the physical layer on transport channels; scheduling information reporting; error correction through HARQ; priority handling between logical channels of one UE; priority handling between UEs by dynamic scheduling; MBMS service identification; transport format selection; and padding.

The main services and functions of the RLC sublayer include: transfer of upper layer protocol data units (PDUs); error correction through ARQ (only for acknowledged mode (AM) data transfer); concatenation, segmentation and reassembly of RLC service data units (SDUs) (only for unacknowledged mode (UM) and acknowledged mode (AM) data transfer); re-segmentation of RLC data PDUs (only for AM data transfer); reordering of RLC data PDUs (only for UM and AM data transfer); duplicate detection (only for UM and AM data transfer); protocol error detection (only for AM data transfer); RLC SDU discard (only for UM and AM data transfer); and RLC re-establishment, except for a NB-IoT UE that only uses Control Plane CloT EPS optimizations.

The main services and functions of the PDCP sublayer for the user plane include: header compression and decompression (ROHC only); transfer of user data; in-sequence delivery of upper layer PDUs at PDCP re-establishment procedure for RLC AM; for split bearers in DC and LWA bearers (only support for RLC AM), PDCP PDU routing for transmission and PDCP PDU reordering for reception; duplicate detection of lower layer SDUs at PDCP re-establishment procedure for RLC AM; retransmission of PDCP SDUs at handover and, for split bearers in DC and LWA bearers, of PDCP PDUs at PDCP data-recovery procedure, for RLC AM; ciphering and deciphering; timer-based SDU discard in uplink. The main services and functions of the PDCP for the control plane include: ciphering and integrity protection; and transfer of control plane data. For split and LWA bearers, PDCP supports routing and reordering. For DRBs mapped on RLC AM and for LWA bearers, the PDCP entity uses the reordering function when the PDCP entity is associated with two AM RLC entities, when the PDCP entity is configured for a LWA bearer; or when the PDCP entity is associated with one AM RLC entity after it was, according to the most recent reconfiguration, associated with two AM RLC entities or configured for a LWA bearer without performing PDCP re-establishment.

Layer 3 (i.e. L3) of the LTE/LTE-A system includes the following sublayers: Radio Resource Control (RRC) and Non Access Stratum (NAS). A radio resource control (RRC) layer located at the bottom of a third layer is defined only in the control plane. The RRC layer controls logical channels, transport channels, and physical channels in relation to configuration, re-configuration, and release of radio bearers (RBs). An RB refers to a service that the second layer provides for data transmission between the UE and the E-UTRAN. To this end, the RRC layer of the UE and the RRC layer of the E-UTRAN exchange RRC messages with each other. The non-access stratum (NAS) layer positioned over the RRC layer performs functions such as session management and mobility management.

Radio bearers are roughly classified into (user) data radio bearers (DRBs) and signaling radio bearers (SRBs). SRBs are defined as radio bearers (RBs) that are used only for the transmission of RRC and NAS messages.

In LTE, one cell of the eNB is set to operate in one of bandwidths such as 1.25, 2.5, 5, 10, 15, and 20 MHz and provides a downlink or uplink transmission service to a plurality of UEs in the bandwidth. Different cells may be set to provide different bandwidths.

Downlink transport channels for transmission of data from the E-UTRAN to the UE include a broadcast channel (BCH) for transmission of system information, a paging channel (PCH) for transmission of paging messages, and a downlink shared channel (SCH) for transmission of user traffic or control messages. Traffic or control messages of a downlink multicast or broadcast service may be transmitted through the downlink SCH and may also be transmitted through a separate downlink multicast channel (MCH).

Uplink transport channels for transmission of data from the UE to the E-UTRAN include a random access channel (RACH) for transmission of initial control messages and an uplink SCH for transmission of user traffic or control messages. Logical channels that are defined above the transport channels and mapped to the transport channels include a broadcast control channel (BCCH), a paging control channel (PCCH), a common control channel (CCCH), a multicast control channel (MCCH), and a multicast traffic channel (MTCH).

FIG. 5 is a diagram showing an example of a physical channel structure used in an E-UMTS system. A physical channel includes several subframes on a time axis and several subcarriers on a frequency axis. Here, one subframe includes a plurality of symbols on the time axis. One subframe includes a plurality of resource blocks and one resource block includes a plurality of symbols and a plurality of subcarriers. In addition, each subframe may use certain subcarriers of certain symbols (e.g., a first symbol) of a subframe for a physical downlink control channel (PDCCH), that is, an L1/L2 control channel. The PDCCH carries scheduling assignments and other control information. In FIG. 5, an L1/L2 control information transmission area (PDCCH) and a data area (PDSCH) are shown. In one implementation, a radio frame of 10ms is used and one radio frame includes 10 subframes. In addition, in LTE, one subframe includes two consecutive slots. The length of one slot may be 0.5ms. In addition, one subframe includes a plurality of OFDM symbols and a portion (e.g., a first symbol) of the plurality of OFDM symbols may be used for transmitting the L1/L2 control information.

A time interval in which one subframe is transmitted is defined as a transmission time interval (TTI). Time resources may be distinguished by a radio frame number (or radio frame index), a subframe number (or subframe index), a slot number (or slot index), and the like. TTI refers to an interval during which data may be scheduled. For example, in the 3GPP LTE/LTE-A system, an opportunity of transmission of an UL grant or a DL grant is present every 1 ms, and the UL/DL grant opportunity does not exists several times in less than 1 ms. Therefore, the TTI in the legacy 3GPP LTE/ LTE-A system is 1ms.

A base station and a UE mostly transmit/receive data via a PDSCH, which is a physical channel, using a downlink shared channel (DL-SCH) which is a transmission channel, except a certain control signal or certain service data. Information indicating to which UE (one or a plurality of UEs) PDSCH data is transmitted and how the UE receive and decode PDSCH data is transmitted in a state of being included in the PDCCH.

For example, in one implementation, a certain PDCCH is CRC-masked with a radio network temporary identity (RNTI) "A" and information about data is transmitted using a radio resource "B" (e.g., a frequency location) and transmission format information "C" (e.g., a transmission block size, modulation, coding information or the like) via a certain subframe. Then, one or more UEs located in a cell monitor the PDCCH using its RNTI information. And, a specific UE with RNTI "A" reads the PDCCH and then receives the PDSCH indicated by B and C in the PDCCH information. In the present disclosure, a PDCCH addressed to an RNTI refers to the PDCCH being cyclic redundancy check masked (CRC-masked) with the RNTI. A UE may attempt to decode a PDCCH using the certain RNTI if the UE is monitoring a PDCCH addressed to the certain RNTI.

A fully mobile and connected society is expected in the near future, which will be characterized by a tremendous amount of growth in connectivity, traffic volume and a much broader range of usage scenarios. Some typical trends include explosive growth of data traffic, great increase of connected devices and continuous emergence of new services. Besides the market requirements, the mobile communication society itself also requires a sustainable development of the eco-system, which produces the needs to further improve system efficiencies, such as spectrum efficiency, energy efficiency, operational efficiency, and cost efficiency. To meet the above ever-increasing requirements from market and mobile communication society, next generation access technologies are expected to emerge in the near future.

Building upon its success of IMT-2000 (3G) and IMT-Advanced (4G), 3GPP has been devoting its effort to IMT-2020 (5G) development since September 2015. 5G New Radio (NR) is expected to expand and support diverse use case scenarios and applications that will continue beyond the current IMT-Advanced standard, for instance, enhanced Mobile Broadband (eMBB), Ultra Reliable Low Latency Communication (URLLC) and massive Machine Type Communication (mMTC). eMBB is targeting high data rate mobile broadband services, such as seamless data access both indoors and outdoors, and AR/VR applications; URLLC is defined for applications that have stringent latency and reliability requirements, such as vehicular communications that can enable autonomous driving and control network in industrial plants; mMTC is the basis for connectivity in IoT, which allows for infrastructure management, environmental monitoring, and healthcare applications.

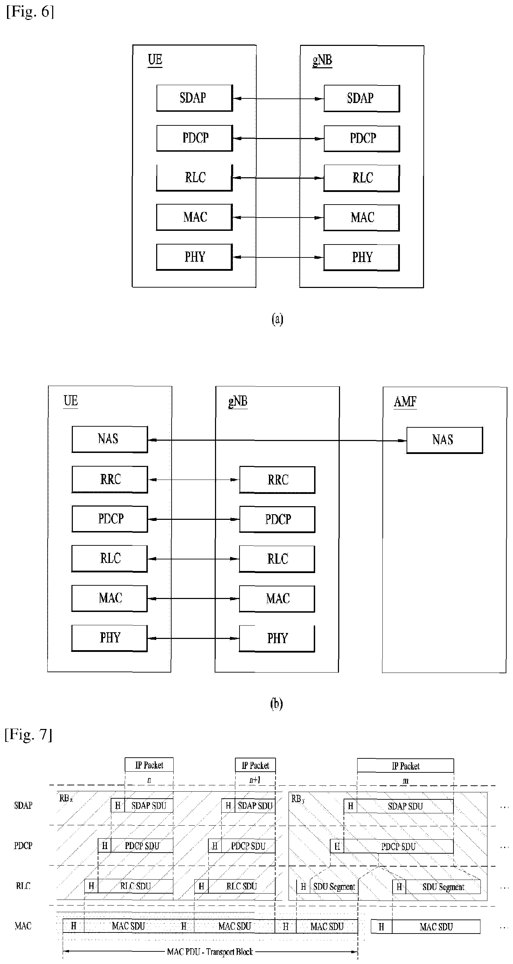

FIG. 6 illustrates an example of protocol stacks of a next generation wireless communication system. In particular, FIG. 6(a) illustrates an example of a radio interface user plane protocol stack between a UE and a gNB and FIG. 6(b) illustrates an example of a radio interface control plane protocol stack between a UE and a gNB.

The control plane refers to a path through which control messages used to manage call by a UE and a network are transported. The user plane refers to a path through which data generated in an application layer, for example, voice data or Internet packet data are transported.

Referring to FIG. 6(a), the user plane protocol stack may be divided into a first layer (Layer 1) (i.e., a physical layer (PHY) layer) and a second layer (Layer 2).

Referring to FIG. 6(b), the control plane protocol stack may be divided into Layer 1 (i.e., a PHY layer), Layer 2, Layer 3 (e.g., a radio resource control (RRC) layer), and a non-access stratum (NAS) layer.

The overall protocol stack architecture for the NR system might be similar to that of the LTE/LTE-A system, but some functionalities of the protocol stacks of the LTE/ LTE-A system should be modified in the NR system in order to resolve the weakness or drawback of LTE. RAN WG2 for NR is in charge of the radio interface architecture and protocols. The new functionalities of the control plane include the following: on-demand system information delivery to reduce energy consumption and mitigate interference, two-level (i.e. Radio Resource Control (RRC) and Medium Access Control (MAC)) mobility to implement seamless handover, beam based mobility management to accommodate high frequency, RRC inactive state to reduce state transition latency and improve UE battery life. The new functionalities of the user plane aim at latency reduction by optimizing existing functionalities, such as concatenation and reordering relocation, and RLC out of order delivery. In addition, a new user plane AS protocol layer named as Service Data Adaptation Protocol (SDAP) has been introduced to handle flow-based Quality of Service (QoS) framework in RAN, such as mapping between QoS flow and a data radio bearer, and QoS flow ID marking. Hereinafter the layer 2 according to the current agreements for NR is briefly discussed.

The layer 2 of NR is split into the following sublayers: Medium Access Control (MAC), Radio Link Control (RLC), Packet Data Convergence Protocol (PDCP) and Service Data Adaptation Protocol (SDAP). The physical layer offers to the MAC sublayer transport channels, the MAC sublayer offers to the RLC sublayer logical channels, the RLC sublayer offers to the PDCP sublayer RLC channels, the PDCP sublayer offers to the SDAP sublayer radio bearers, and the SDAP sublayer offers to 5GC QoS flows. Radio bearers are categorized into two groups: data radio bearers (DRB) for user plane data and signalling radio bearers (SRB) for control plane data.

The main services and functions of the MAC sublayer of NR include: mapping between logical channels and transport channels; multiplexing/demultiplexing of MAC SDUs belonging to one or different logical channels into/from transport blocks (TB) delivered to/from the physical layer on transport channels; scheduling information reporting; error correction through HARQ (one HARQ entity per carrier in case of carrier aggregation); priority handling between UEs by dynamic scheduling; priority handling between logical channels of one UE by logical channel prioritization; and padding. A single MAC entity can support one or multiple numerologies and/or transmission timings, and mapping restrictions in logical channel prioritisation controls which numerology and/or transmission timing a logical channel can use.

The RLC sublayer of NR supports three transmission modes: Transparent Mode (TM); Unacknowledged Mode (UM); Acknowledged Mode (AM). The RLC configuration is per logical channel with no dependency on numerologies and/or TTI durations, and ARQ can operate on any of the numerologies and/or TTI durations the logical channel is configured with. For SRB0, paging and broadcast system information, TM mode is used. For other SRBs AM mode used. For DRBs, either UM or AM mode are used. The main services and functions of the RLC sublayer depend on the transmission mode and include: transfer of upper layer PDUs; sequence numbering independent of the one in PDCP (UM and AM); error correction through ARQ (AM only); segmentation (AM and UM) and re-segmentation (AM only) of RLC SDUs; Reassembly of SDU (AM and UM); duplicate detection (AM only); RLC SDU discard (AM and UM); RLC re-establishment; and protocol error detection (AM only). The ARQ within the RLC sublayer of NR has the following characteristics: ARQ retransmits RLC PDUs or RLC PDU segments based on RLC status reports; polling for RLC status report is used when needed by RLC; and RLC receiver can also trigger RLC status report after detecting a missing RLC PDU or RLC PDU segment.

The main services and functions of the PDCP sublayer of NR for the user plane include: sequence numbering; header compression and decompression (ROHC only); transfer of user data; reordering and duplicate detection; PDCP PDU routing (in case of split bearers); retransmission of PDCP SDUs; ciphering, deciphering and integrity protection; PDCP SDU discard; PDCP re-establishment and data recovery for RLC AM; and duplication of PDCP PDUs. The main services and functions of the PDCP sublayer of NR for the control plane include: sequence numbering; ciphering, deciphering and integrity protection; transfer of control plane data; reordering and duplicate detection; and duplication of PDCP PDUs.

The main services and functions of SDAP include: mapping between a QoS flow and a data radio bearer; marking QoS flow ID (QFI) in both DL and UL packets. A single protocol entity of SDAP is configured for each individual PDU session. Compared to LTE's QoS framework, which is bearer-based, the 5G system adopts the QoS flow-based framework. The QoS flow-based framework enables flexible mapping of QoS flow to DRB by decoupling QoS flow and the radio bearer, allowing more flexible QoS characteristic configuration.

The main services and functions of RRC sublayer of NR include: broadcast of system information related to access stratum (AS) and non-access stratum (NAS); paging initiated by a 5GC or an NG-RAN; establishment, maintenance, and release of RRC connection between a UE and a NG-RAN (which further includes modification and release of carrier aggregation and further includes modification and release of the DC between an E-UTRAN and an NR or in the NR; a security function including key management; establishment, configuration, maintenance, and release of SRB(s) and DRB(s); handover and context transfer; UE cell selection and re-release and control of cell selection/re-selection; a mobility function including mobility between RATs; a QoS management function, UE measurement report, and report control; detection of radio link failure and discovery from radio link failure; and NAS message transfer to a UE from a NAS and NAS message transfer to the NAS from the UE.

FIG. 7 illustrates a data flow example at a transmitting device in the NR system.

In FIG. 7, an RB denotes a radio bearer. Referring to FIG. 7, a transport block is generated by MAC by concatenating two RLC PDUs from RBx and one RLC PDU from RBy. In FIG. 7, the two RLC PDUs from RBx each corresponds to one IP packet (n and n+1) while the RLC PDU from RBy is a segment of an IP packet (m). In NR, a RLC SDU segment can be located in the beginning part of a MAC PDU and/or in the ending part of the MAC PDU. The MAC PDU is transmitted/received using radio resources through a physical layer to/from an external device.

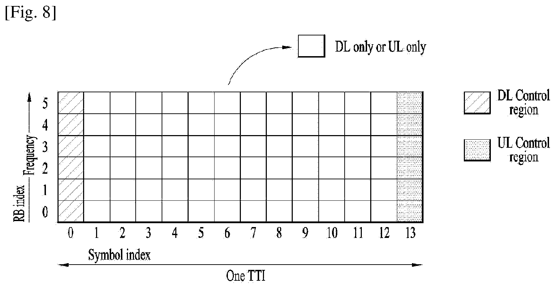

FIG. 8 illustrates an example of a slot structure available in a new radio access technology (NR).

To reduce or minimize data transmission latency, in a 5G new RAT, a slot structure in which a control channel and a data channel are time-division-multiplexed is considered.

In the example of FIG. 8, the hatched area represents the transmission region of a DL control channel (e.g., PDCCH) carrying the DCI, and the black area represents the transmission region of a UL control channel (e.g., PUCCH) carrying the UCI. Here, the DCI is control information that the gNB transmits to the UE. The DCI may include information on cell configuration that the UE should know, DL specific information such as DL scheduling, and UL specific information such as UL grant. The UCI is control information that the UE transmits to the gNB. The UCI may include a HARQ ACK/NACK report on the DL data, a CSI report on the DL channel status, and a scheduling request (SR).

In the example of FIG. 8, the region of symbols from symbol index 1 to symbol index 12 may be used for transmission of a physical channel (e.g., a PDSCH) carrying downlink data, or may be used for transmission of a physical channel (e.g., PUSCH) carrying uplink data. According to the slot structure of FIG. 8, DL transmission and UL transmission may be sequentially performed in one slot, and thus transmission/ reception of DL data and reception/transmission of UL ACK/NACK for the DL data may be performed in one slot. As a result, the time taken to retransmit data when a data transmission error occurs may be reduced, thereby minimizing the latency of final data transmission.

In such a slot structure, a time gap is needed for the process of switching from the transmission mode to the reception mode or from the reception mode to the transmission mode of the gNB and UE. On behalf of the process of switching between the transmission mode and the reception mode, some OFDM symbols at the time of switching from DL to UL in the slot structure are set as a guard period (GP).

In the legacy LTE/LTE-A system, a DL control channel is time-division-multiplexed with a data channel and a PDCCH, which is a control channel, is transmitted throughout an entire system band. However, in the new RAT, it is expected that a bandwidth of one system reaches approximately a minimum of 100 MHz and it is difficult to distribute the control channel throughout the entire band for transmission of the control channel. For data transmission/reception of a UE, if the entire band is monitored to receive the DL control channel, this may cause increase in battery consumption of the UE and deterioration in efficiency. Accordingly, in the present disclosure, the DL control channel may be locally transmitted or distributively transmitted in a partial frequency band in a system band, i.e., a channel band.

In the NR system, the basic transmission unit is a slot. A duration of the slot includes 14 symbols having a normal cyclic prefix (CP) or 12 symbols having an extended CP. In addition, the slot is scaled in time as a function of a used subcarrier spacing.

Hereinafter, RLC entities are explained.

RRC is generally in control of the RLC configuration. Functions of the RLC sub layer are performed by RLC entities. For an RLC entity configured at the gNB, there is a peer RLC entity configured at the UE and vice versa. An RLC entity receives/ delivers RLC SDUs from/to upper layer and sends/receives RLC PDUs to/from its peer RLC entity via lower layers.

An RLC PDU can either be an RLC data PDU or an RLC control PDU. If an RLC entity receives RLC SDUs from upper layer, it receives them through a single RLC channel between RLC and upper layer, and after forming RLC data PDUs from the received RLC SDUs, the RLC entity submits the RLC data PDUs to lower layer through a single logical channel. If an RLC entity receives RLC data PDUs from lower layer, it receives them through a single logical channel, and after forming RLC SDUs from the received RLC data PDUs, the RLC entity delivers the RLC SDUs to upper layer through a single RLC channel between RLC and upper layer. If an RLC entity submits/receives RLC control PDUs to/from lower layer, it submits/receives them through the same logical channel it submits/receives the RLC data PDUs through.

An RLC entity can be configured to perform data transfer in one of the following three modes: Transparent Mode (TM), Unacknowledged Mode (UM) or Acknowledged Mode (AM). Consequently, an RLC entity is categorized as a TM RLC entity, an UM RLC entity or an AM RLC entity depending on the mode of data transfer that the RLC entity is configured to provide.

A TM RLC entity is configured either as a transmitting TM RLC entity or a receiving TM RLC entity. The transmitting TM RLC entity receives RLC SDUs from upper layer and sends RLC PDUs to its peer receiving TM RLC entity via lower layers. The receiving TM RLC entity delivers RLC SDUs to upper layer and receives RLC PDUs from its peer transmitting TM RLC entity via lower layers. An UM RLC entity is configured either as a transmitting UM RLC entity or a receiving UM RLC entity. The transmitting UM RLC entity receives RLC SDUs from upper layer and sends RLC PDUs to its peer receiving UM RLC entity via lower layers. The receiving UM RLC entity delivers RLC SDUs to upper layer and receives RLC PDUs from its peer transmitting UM RLC entity via lower layers. An AM RLC entity consists of a transmitting side and a receiving side. The transmitting side of an AM RLC entity receives RLC SDUs from upper layer and sends RLC PDUs to its peer AM RLC entity via lower layers. The receiving side of an AM RLC entity delivers RLC SDUs to upper layer and receives RLC PDUs from its peer AM RLC entity via lower layers.

Especially, the TM RLC entity can be configured to submit/receive RLC PDUs through BCCH, DL/UL CCCH, and PCCH. The TM RLC entity submits/receives TMD PDU. When a transmitting TM RLC entity forms TMD PDUs from RLC SDUs, it shall not segment the RLC SDUs and not include any RLC headers in the TMD PDUs. When a receiving TM RLC entity receives TMD PDUs, it shall deliver the TMD PDUs (which are just RLC SDUs) to upper layer.

While, the UM RLC entity can be configured to submit/receive RLC PDUs through DL/UL DTCH. The UM RLC entity submits/receives the UMD PDU, which contains either one complete RLC SDU or one RLC SDU segment. The transmitting UM RLC entity generates UMD PDU(s) for each RLC SDU. It shall include relevant RLC headers in the UMD PDU. When notified of a transmission opportunity by the lower layer, the transmitting UM RLC entity shall segment the RLC SDUs, if needed, so that the corresponding UMD PDUs, with RLC headers updated as needed, fit within the total size of RLC PDU(s) indicated by lower layer.

When a receiving UM RLC entity receives UMD PDUs, it shall detect the loss of RLC SDU segments at lower layers, reassemble RLC SDUs from the received UMD PDUs and deliver the RLC SDUs to upper layer as soon as they are available, and discard received UMD PDUs that cannot be re-assembled into an RLC SDU due to loss at lower layers of an UMD PDU which belonged to the particular RLC SDU.

In the prior art, the RLC TM is used only for special RRC signaling such as BCCH, CCCH, and PCCH where ciphering or integrity protection is not applied, and each RLC PDU is independent of other RLC PDUs. Thus, the RBs using RLC TM do not use PDCP and do not attach RLC header. However, using RLC TM is beneficial in that it does not attach any RLC overhead. Note that for RLC UM or RLC AM, 1 to 3 bytes RLC header are attached and 2 more bytes RLC header are attached if segmentation is performed. Removing such RLC header reduces consumed radio resource, and is beneficial especially for small size packet. Therefore, a mechanism to support RB using RLC TM should be considered.

The invention is that the UE configures a RB comprising a PDCP entity and one or more TM RLC entities.

The network configures the UE with the RB using the TM RLC entity via an RRC message. For non-split and non-duplicate bearer, the RB is configured with one PDCP entity and one RLC entity (for uni-directional RB) or two RLC entities (for bi-directional RB, one for UL and one for DL). For split bearer or duplicate bearer, the RB is configured with one PDCP entity and two RLC entities (for uni-directional RB, both for UL or both for DL) or four RLC entities (for bi-directional RB, two for UL and two for DL). The RB using RLC TM can be either data RB (DRB) or signaling RB (SRB). For the DRB, the RB also comprises an SDAP entity above PDCP.

### Transmitter side

The PDCP entity receives a PDCP SDU from upper layers (i.e. SDAP layer for DRB, and RRC layer for SRB), and stores it in the PDCP SDU buffer. At the transmission opportunity, the PDCP entity performs header compression, if configured, and ciphering and/or integrity protection, if configured, for the PDCP SDU, and attaches a PDCP PDU header to the PDCP SDU to generate a PDCP PDU. The PDCP PDU header includes at least one of D/C field (indicates whether the PDU is the Data PDU or the Control PDU) and the PDCP Sequence Number (SN) field. The length of the PDCP SN is either 12 bytes or 18 bytes, which consumes 2 bytes or 3 bytes for the PDCP PDU header. If the PDCP SDU is integrity protected, four bytes MAC-I field is attached at the end of the PDCP PDU. After generating the PDCP PDU, the PDCP entity submits it to the TM RLC entity.

The TM RLC entity receives RLC SDUs from the PDCP entity, and stores them in the RLC transmission buffer. When the MAC entity notifies a transmission opportunity with the total size of the RLC PDUs to be transmitted in the transmission opportunity (called "MAC indicated RLC size" hereinafter), the TM RLC entity submits RLC SDUs to the MAC entity only up to an RLC SDU such that the total size of RLC SDUs (called "submitted RLC size" hereinafter) is less than or equal to the MAC indicated RLC size.

The TM RLC entity submits the RLC SDUs to the MAC entity in the receiving order of RLC SDUs from the PDCP entity. However, if the remaining space of the MAC indicated RLC size is less than the next stored RLC SDU size, the TM RLC entity can fill up the remaining space in one of the stored RLC SDU. In other words, the TM RLC entity can submit RLC SDUs to the MAC entity in any order, as long as the submitted RLC size is less than or equal to the MAC indicated RLC size. The TM RLC entity fills up the MAC indicated RLC size as much as it can until the remaining space cannot be filled with any of the stored RLC SDU. If the remaining space cannot be filled with any of the stored RLC SDU, the remaining space of MAC indicated RLC size is not used by the TM RLC entity, i.e. the TM RLC entity just skips the remaining space of the MAC indicated RLC size.

When submitting the RLC SDU to the MAC entity, the TM RLC entity does not change or modify the RLC SDU. In other words, the TM RLC entity submits the RLC SDU to the MAC entity as an RLC PDU without any change or modification to the RLC SDU. The TM RLC entity submits RLC SDUs to the MAC entity in the unit of RLC SDU, i.e. the TM RLC entity submits RLC SDUs on RLC SDU by RLC SDU basis. The logical channel used for the RLC PDU submission in the TM RLC entity can be any type of logical channel, i.e. DCCH, DTCH, MCCH, MTCH in addition to BCCH, CCCH, and PCCH.

The MAC entity receives an RLC PDU from the TM RLC entity, and attaches a MAC subheader to the RLC PDU to generate a MAC subPDU. For each received RLC PDU, the MAC entity generates a MAC subPDU. The MAC entity generates a MAC PDU by multiplexing MAC subPDUs received from multiple logical channels, and transmits the MAC PDU to the receiver via air interface.

If the TM RLC entity submits RLC PDUs whose size is less than the MAC indicated RLC size, the MAC entity fills that amount with padding or BSR in the MAC PDU. The MAC entity may allocate that amount to other logical channels to reduce the amount of padding or BSR.

The best way to minimize the padding or BSR is that the TM RLC entity indicates the size of each RLC SDU stored in the RLC transmission buffer to the MAC entity. Then, the MAC entity considers each RLC SDU size in the Logical Channel Prioritization (LCP) procedure so that the MAC indicated RLC size is exactly filled with the RLC SDUs.

Another way to minimize the padding or BSR is that the RRC configures the size of RLC PDU for the TM RLC entity, and the MAC entity considers that RLC PDU size in LCP procedure. This method is applicable when the size of the packet is fixed in the radio bearer. The MAC entity allocates the MAC indicated RLC size to the TM RLC entity in the integer multiple of the fixed RLC PDU size.

### Receiver side

When the MAC entity receives a MAC PDU, the MAC entity reassembles each MAC subPDU and delivers it to the corresponding logical channel identified by the MAC subheader.

When the TM RLC entity receives an RLC PDU from the MAC entity, the TM RLC entity delivers it to the PDCP entity as an RLC SDU. When delivering the RLC PDU to the PDCP entity, the TM RLC entity does not change or modify the RLC PDU. In other words, the TM RLC entity delivers the RLC PDU to the PDCP entity as an RLC SDU without any change or modification to the RLC PDU. The TM RLC entity immediately delivers the RLC PDU to the PDCP entity upon reception from the MAC entity.

When the PDCP entity receives a PDCP PDU from the TM RLC entity, the PDCP entity stores it in the PDCP reordering buffer after performing deciphering and/or integrity verification, if configured. The PDCP entity reorders the PDCP PDU based on the PDCP SN included in the PDCP PDU header. After reordering, the PDCP entity performs header decompression, if configured, of the PDCP SDU, and delivers it to the upper layer (i.e. SDAP layer for DRB, and RRC layer for SRB).

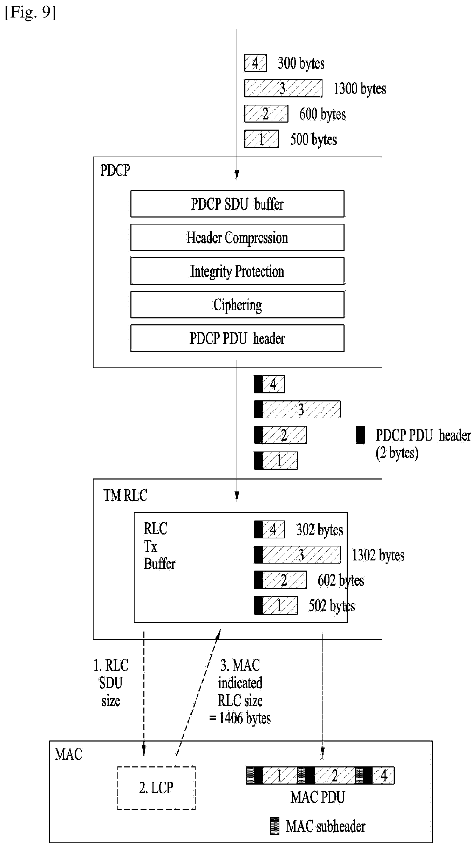

FIG. 9 shows an example about transmitting side operation of RB using TM RLC according to an embodiment of the present invention.

Referring to FIG. 9, the PDCP entity receives PDCP SDUs 1-4 from the upper layer (i.e. SDAP layer or RRC layer). The size of each PDCP SDU is as follows: PDCP SDU1 = 500 bytes, PDCP SDU2 = 600 bytes, PDCP SDU3 = 1300 bytes, PDCP SDU4 = 300 bytes. The PDCP entity stores PDCP SDUs 1-4 in the PDCP SDU buffer.

At the transmission opportunity, the PDCP entity generates PDCP PDUs from the PDCP SDUs by performing header compression, ciphering, integrity protection, and attaching PDCP PDU header. One PDCP PDU contains one PDCP SDU. The PDCP entity submits the generated PDCP PDUs to the TM RLC entity.

The TM RLC stores the PDCP PDUs in the TM RLC transmission buffer, and indicates the size of each RLC SDU to the MAC entity. The size of RLC SDUs is as follows: RLC SDU1 = 502 bytes, RLC SDU2 = 602 bytes, RLC SDU3 = 1302 bytes, RLC SDU4 = 302 bytes.

When the MAC entity receives an UL grant, the MAC entity performs an LCP procedure to allocate resource to each RLC entity. Taking the RLC SDU size into account, the MAC entity decides to allocate 1406 bytes to the TM RLC entity. The MAC entity indicates to the TM RLC entity that the RLC entity submits RLC SDUs to the MAC entity, the total size being 1406 bytes.

When the TM RLC entity receives an transmission opportunity indication and the MAC indicated RLC size from the MAC entity, the TM RLC entity fills up the MAC indicated RLC size by stored RLC SDUs in the receiving order of RLC SDUs from the PDCP entity.

After including RLC SDU1 and RLC SDU2, the TM RLC entity skips RLC SDU3 because the remaining space of the MAC indicated RLC size is less than the size of RLC SDU3. Instead, the TM RLC entity includes the RLC SDU4 because whose size is fit to the remaining space of the MAC indicated RLC size. The TM RLC entity submits RLC SDUs 1, 2, and 4 to the MAC entity.

The TM RLC entity generates a MAC PDU including RLC SDUs 1, 2, and 4, and transmits it to the receiver via air interface.

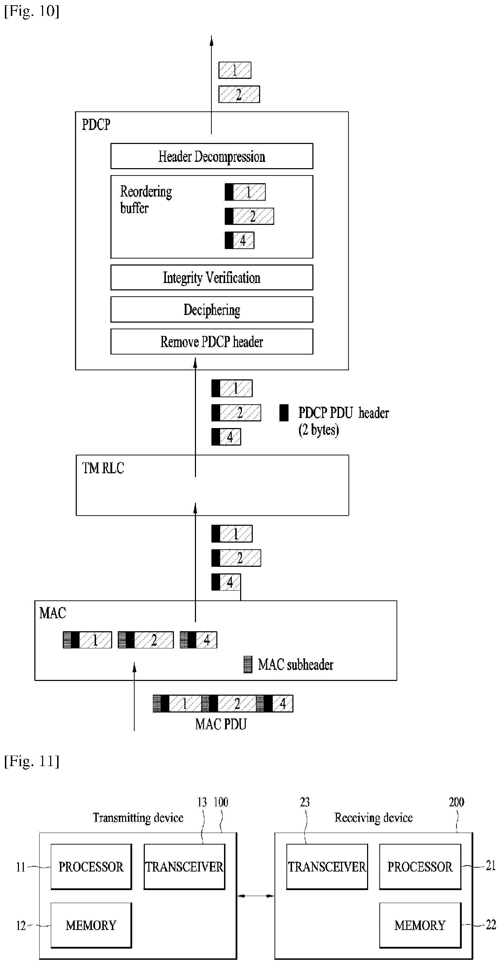

FIG. 10 shows an example about receiving side operation of RB using TM RLC according to an embodiment of the present invention.

Referring to FIG. 10, the MAC entity receives a MAC PDU via the air interface.

The MAC entity reassembles MAC subPDU based on MAC subheader, and delivers the RLC PDU to the TM RLC entity identified by the MAC subheader. When the TM RLC entity receives RLC PDUs from the MAC entity, the TM RLC entity immediately delivers the RLC PDUs to the PDCP entity in the receiving order of RLC PDUs from the MAC entity, without change or modification to the RLC PDUs.

When the PDCP entity receives PDCP PDUs from the PDCP entity, the PDCP entity stores the PDCP PDUs in the reordering buffer after performing deciphering and/or integrity verification, if configured.

The PDCP entity delivers PDCP SDU 1 and 2 to the upper layer after performing header decompression, as they are in-sequence. However, the PDCP keeps the PDCP SDU 4 in the reordering buffer because the PDCP SDU 3 is not yet received. The PDCP entity delivers the PDCP SDU 4 to the upper layer after the PDCP SDU 3 is delivered to upper layer, or after the reordering timer expires.

FIG. 11 is a block diagram illustrating an example of elements of a transmitting device 100 and a receiving device 200 according to some implementations of the present disclosure.

The transmitting device 100 and the receiving device 200 respectively include transceivers 13 and 23 capable of transmitting and receiving radio signals carrying information, data, signals, and/or messages, memories 12 and 22 for storing information related to communication in a wireless communication system, and processors 11 and 21 operationally connected to elements such as the transceivers 13 and 23 and the memories 12 and 22 to control the elements and configured to control the memories 12 and 22 and/or the transceivers 13 and 23 so that a corresponding device may perform at least one of the above-described implementations of the present disclosure.

The memories 12 and 22 may store programs for processing and controlling the processors 11 and 21 and may temporarily store input/output information. The memories 12 and 22 may be used as buffers. The buffers at each protocol layer (e.g. PDCP, RLC, MAC) are parts of the memories 12 and 22.

The processors 11 and 21 generally control the overall operation of various modules in the transmitting device and the receiving device. Especially, the processors 11 and 21 may perform various control functions to implement the present disclosure. For example, the operations occurring at the protocol stacks (e.g. PDCP, RLC, MAC and PHY layers) according to the present disclosure may be performed by the processors 11 and 21. The protocol stacks performing operations of the present disclosure may be parts of the processors 11 and 21.

The processors 11 and 21 may be referred to as controllers, microcontrollers, microprocessors, or microcomputers. The processors 11 and 21 may be implemented by hardware, firmware, software, or a combination thereof. In a hardware configuration, application specific integrated circuits (ASICs), digital signal processors (DSPs), digital signal processing devices (DSPDs), programmable logic devices (PLDs), or field programmable gate arrays (FPGAs) may be included in the processors 11 and 21. The present disclosure may be implemented using firmware or software, and the firmware or software may be configured to include modules, procedures, functions, etc. performing the functions or operations of the present disclosure. Firmware or software configured to perform the present disclosure may be included in the processors 11 and 21 or stored in the memories 12 and 22 so as to be driven by the processors 11 and 21.

The processor 11 of the transmitting device 100 performs predetermined coding and modulation for a signal and/or data scheduled to be transmitted to the outside by the processor 11 or a scheduler connected with the processor 11, and then transfers the coded and modulated data to the transceiver 13. For example, the processor 11 converts a data stream to be transmitted into K layers through demultiplexing, channel coding, scrambling, and modulation. The coded data stream is also referred to as a codeword and is equivalent to a transport block which is a data block provided by a MAC layer. One transport block (TB) is coded into one codeword and each codeword is transmitted to the receiving device in the form of one or more layers. For frequency up-conversion, the transceiver 13 may include an oscillator. The transceiver 13 may include Nt (where Nt is a positive integer) transmission antennas.

A signal processing process of the receiving device 200 is the reverse of the signal processing process of the transmitting device 100. Under control of the processor 21, the transceiver 23 of the receiving device 200 receives radio signals transmitted by the transmitting device 100. The transceiver 23 may include Nr (where Nr is a positive integer) receive antennas and frequency down-converts each signal received through receive antennas into a baseband signal. The processor 21 decodes and demodulates the radio signals received through the reception antennas and restores data that the transmitting device 100 intended to transmit.

The transceivers 13 and 23 include one or more antennas. An antenna performs a function for transmitting signals processed by the transceivers 13 and 23 to the exterior or receiving radio signals from the exterior to transfer the radio signals to the transceivers 13 and 23. The antenna may also be called an antenna port. Each antenna may correspond to one physical antenna or may be configured by a combination of more than one physical antenna element. The signal transmitted from each antenna cannot be further deconstructed by the receiving device 200. An RS transmitted through a corresponding antenna defines an antenna from the view point of the receiving device 200 and enables the receiving device 200 to derive channel estimation for the antenna, irrespective of whether the channel represents a single radio channel from one physical antenna or a composite channel from a plurality of physical antenna elements including the antenna. That is, an antenna is defined such that a channel carrying a symbol of the antenna can be obtained from a channel carrying another symbol of the same antenna. An transceiver supporting a MIMO function of transmitting and receiving data using a plurality of antennas may be connected to two or more antennas. The transceivers 13 and 23 may be referred to as radio frequency (RF) units.

In the implementations of the present disclosure, a UE operates as the transmitting device 100 in UL and as the receiving device 200 in DL. In the implementations of the present disclosure, a BS operates as the receiving device 200 in UL and as the transmitting device 100 in DL. Hereinafter, a processor, a transceiver, and a memory included in the UE will be referred to as a UE processor, a UE transceiver, and a UE memory, respectively, and a processor, a transceiver, and a memory included in the BS will be referred to as a BS processor, a BS transceiver, and a BS memory, respectively.

The UE processor can be configured to operate according to the present disclosure, or control the UE transceiver to receive or transmit signals according to the present disclosure. The BS processor can be configured to operate according to the present disclosure, or control the BS transceiver to receive or transmit signals according to the present disclosure.

The processor 11 (at a UE and/or at a BS) checks whether there is a UL grant or DL assignment for a serving cell in a time unit. If there is a UL grant or DL assignment for the serving cell in the time unit, the processor 11 checks whether a data unit is actually present on the UL grant or DL assignment in the time unit, in order to determine whether to restart a deactivation timer associated with the serving cell which has been started. The processor 11 restarts the deactivation timer associated with the serving cell in the time unit if there is a data unit present on the UL grant or DL assignment in the time unit. The processor 11 does not restart the deactivation timer associated with the serving cell in the time unit if there is no data unit present on the UL grant or DL assignment in the time unit, unless another condition that the processor 11 should restart the deactivation timer is satisfied. The processor 11 does not restart the deactivation timer associated with the serving cell in the time unit if there is no data unit present on the UL grant or DL assignment in the time unit and if an activation command for activating the serving cell is not present in the time unit. The processor 11 may be configured to check whether a data unit is actually present on the UL grant or DL assignment on the serving cell in the time unit in order to determine whether to restart the deactivation timer of the serving cell, if the UL grant or DL assignment is a configured grant/assignment which is configured by RRC to occur periodically on the serving cell. The processor 11 may be configured to check whether a data unit is actually present on the UL grant or DL assignment on the serving cell in the time unit in order to determine whether to restart the deactivation timer of the serving cell, if the UL grant or the DL assignment is a dynamic grant/assignment which is indicated by a PDCCH. The processor 11 may be configured to check whether a data unit is actually present on the UL grant or DL assignment on the serving cell in the time unit in order to determine whether to restart the deactivation timer of the serving cell, if the serving cell is a SCell of the UE. The processor 11 (at the UE and/or the BS) deactivates the serving cell upon expiry of the deactivation timer associated with the serving cell.

As described above, the detailed description of the preferred implementations of the present disclosure has been given to enable those skilled in the art to implement and practice the disclosure.

### Industrial Applicability

The implementations of the present disclosure are applicable to a network node (e.g., BS), a UE, or other devices in a wireless communication system.

## Claims

1. A method for transmitting signals by a Medium Access Control, MAC, entity of a transmission end in a wireless communication system, the method comprising:
receiving, from an upper layer, information about sizes of a plurality of service data units, SDUs, stored in the upper layer;
selecting at least one SDU of the plurality of SDUs by considering an uplink grant and the sizes of SDUs;
transmitting information about the at least one selected SDU to the upper layer;
receiving the at least one selected SDU from the upper layer;
generating a MAC protocol data unit, PDU, including the at least one selected SDU; and
transmitting the MAC PDU to a reception end.

2. The method of claim 1, wherein the at least one selected SDU is received without adding a header by the upper layer and without segmenting by the upper layer.

3. The method of claim 1, wherein, if a number of the at least one selected SDU is two or more, the at least one selected SDU is received from the upper layer in an order received at the upper layer from a Packet Data Convergence Protocol, PDCP, layer.

4. A transmission end (100) in a wireless communication system, the transmission end comprising:
a memory (12); and
at least one processor (11) coupled to the memory (12) and configured to control a Medium Access Control, MAC, entity of the transmission end to:
receive, from an upper layer, information about sizes of a plurality of service data units, SDUs, stored in the upper layer;
select at least one SDU of the plurality of SDUs by considering an uplink grant and the sizes of SDUs;
transmit information about the at least one selected SDU to the upper layer;
receive the at least one selected SDU from the upper layer;
generate a MAC protocol data unit, PDU, including the at least one selected SDU; and
transmit the MAC PDU to a reception end.

5. The transmission end of claim 4, wherein the at least one selected SDU is received without adding a header by the upper layer and without segmenting by the upper layer.

6. The transmission end of claim 4, wherein, if a number of the at least one selected SDU is two or more, the at least one selected SDU is received from the upper layer in an order received at the upper layer from a Packet Data Convergence Protocol, PDCP, layer.

7. A method for transmitting signals by a Transparent Mode, TM, Radio Link Control, RLC, entity of a transmission end in a wireless communication system, the method comprising:
receiving a plurality of data units from a Packet Data Convergence Protocol, PDCP, layer;
storing the plurality of data units in a buffer;
transmitting, to a Medium Access Control, MAC, layer, information about sizes of the plurality of data units;
receiving, from the MAC layer, information about at least one data unit among the plurality of data units;
transmitting, to the MAC layer, the at least one data unit.

8. The method of claim 7, wherein, if a number of the at least one data unit is two or more, the at least one data unit is transmitted to the MAC layer in an order received from the PDCP layer.

9. The method of claim 7, wherein the at least one data unit is selected unit among the plurality of data units based on an uplink grant and the sizes of the plurality of data units by the MAC layer.

10. The method of claim 9, wherein the plurality of data units except for the selected at least one data unit are maintained in the buffer.

11. A transmission end (100) in a wireless communication system, the transmission end comprising:
a memory (12); and
at least one processor (11) coupled to the memory (12) and configured to control a Transparent Mode, TM, Radio Link Control, RLC, entity of the transmission end to:
receive a plurality of data units from a Packet Data Convergence Protocol, PDCP, layer;
store the plurality of data units in the memory;
transmit, to a Medium Access Control, MAC, layer, information about sizes of the plurality of data units;
receive, from the MAC layer, information about at least one data unit among the plurality of data units;
transmitting, to the MAC layer, the at least one data unit.

12. The transmission end of claim 11, wherein, if a number of the at least one data unit is two or more, the at least one data unit is transmitted to the MAC layer in an order received from the PDCP layer.

13. The transmission end of claim 11, wherein the at least one data unit is selected unit among the plurality of data units based on an uplink grant and the sizes of the plurality of data units by the MAC layer.

14. The transmission end of claim 13, wherein the plurality of data units except for the selected at least one data unit are maintained in the memory.

## Patentansprüche

1. Verfahren zum Übertragen von Signalen durch eine Medium Access Control, MAC, Entität eines Übertragungsendes in einem drahtlosen Kommunikationssystem, wobei das Verfahren umfasst:
Empfangen, von einer oberen Schicht, von Informationen über Größen einer Vielzahl von Dienstdateneinheiten, SDUs, die in der oberen Schicht gespeichert sind;
Auswählen von mindestens einer SDU aus der Vielzahl von SDUs unter Berücksichtigung einer Uplink-Gewährung und der Größen von SDUs;
Übermitteln von Informationen über die mindestens eine ausgewählte SDU an die obere Schicht;
Empfangen der mindestens einen ausgewählten SDU von der oberen Schicht;
Erzeugen einer MAC-Protokolldateneinheit, PDU, die die mindestens eine ausgewählte SDU enthält; und
Übertragen der MAC-PDU an eine Empfangsseite.

2. Verfahren nach Anspruch 1, wobei die mindestens eine ausgewählte SDU ohne Hinzufügen eines Headers durch die obere Schicht und ohne Segmentierung durch die obere Schicht empfangen wird.

3. Verfahren nach Anspruch 1, wobei, falls eine Anzahl der mindestens einen ausgewählten SDU zwei oder mehr beträgt, die mindestens eine ausgewählte SDU von der oberen Schicht in einer Reihenfolge empfangen wird, die an der oberen Schicht von einer Packet Data Convergence Protocol, PDCP, -Schicht empfangen wird.

4. Übertragungsende (100) in einem drahtlosen Kommunikationssystem, wobei das Übertragungsende umfasst:
einen Speicher (12); und
mindestens einen Prozessor (11), der mit dem Speicher (12) gekoppelt und konfiguriert ist, eine Medium Access Control, MAC, -Einheit des Übertragungsendes zu steuern:
von einer oberen Schicht Informationen über Größen einer Vielzahl von Dienstdateneinheiten, SDUs, die in der oberen Schicht gespeichert sind, zu empfangen;
mindestens eine SDU aus der Vielzahl von SDUs unter Berücksichtigung einer Uplink Gewährung und der Größen von SDUs auszuwählen;
Informationen über die mindestens eine ausgewählte SDU an die obere Schicht zu übermitteln;
die mindestens eine ausgewählte SDU von der oberen Schicht zu empfangen;
eine MAC-Protokolldateneinheit, PDU, zu erzeugen, die die mindestens eine ausgewählte SDU enthält; und
die MAC-PDU an eine Empfangsseite zu übertragen.

5. Übertragungsende nach Anspruch 4, wobei die mindestens eine ausgewählte SDU ohne Hinzufügen eines Headers durch die obere Schicht und ohne Segmentierung durch die obere Schicht empfangen wird.

6. Übertragungsende nach Anspruch 4, wobei, falls eine Anzahl der mindestens einen ausgewählten SDU zwei oder mehr beträgt, die mindestens eine ausgewählte SDU von der oberen Schicht in einer Reihenfolge empfangen wird, die an der oberen Schicht von einer Packet Data Convergence Protocol, PDCP, -Schicht empfangen wird.

7. Verfahren zum Übertragen von Signalen durch eine Transparent Mode, TM, Radio Link Control, RLC, Entität eines Übertragungsendes in einem drahtlosen Kommunikationssystem, wobei das Verfahren umfasst:
Empfangen einer Vielzahl von Dateneinheiten von einer Packet Data Convergence Protocol, PDCP, -Schicht;
Speichern der Vielzahl von Dateneinheiten in einem Puffer;
Übermitteln von Informationen über Größen der Vielzahl von Dateneinheiten an eine Medium Access Control, MAC, -Schicht;
Empfangen, von der MAC-Schicht, von Informationen über mindestens eine Dateneinheit aus der Vielzahl der Dateneinheiten;
Übertragen der mindestens einen Dateneinheit an die MAC-Schicht.

8. Verfahren nach Anspruch 7, wobei, falls eine Anzahl der mindestens einen Dateneinheit zwei oder mehr beträgt, die mindestens eine Dateneinheit in einer von der PDCP-Schicht empfangenen Reihenfolge an die MAC-Schicht übertragen wird.

9. Verfahren nach Anspruch 7, wobei die mindestens eine Dateneinheit aus der Vielzahl von Dateneinheiten auf der Grundlage einer Uplink Gewährung und der Größen der Vielzahl von Dateneinheiten durch die MAC-Schicht ausgewählt wird.

10. Verfahren nach Anspruch 9, wobei die Vielzahl von Dateneinheiten mit Ausnahme der ausgewählten mindestens einen Dateneinheit in dem Puffer beibehalten wird.

11. Übertragungsende (100) in einem drahtlosen Kommunikationssystem, wobei das Übertragungsende umfasst:
einen Speicher (12); und
mindestens einen Prozessor (11), der mit dem Speicher (12) gekoppelt und konfiguriert ist, eine Transparent Mode, TM, Radio Link Control, RLC, Entität des Übertragungsendes zu steuern, um:
eine Vielzahl von Dateneinheiten von einer Packet Data Convergence Protocol, PDCP, -Schicht zu empfangen;
die Vielzahl von Dateneinheiten in dem Speicher zu speichern;
Informationen über Größen der Vielzahl von Dateneinheiten an eine Medium Access Control, MAC, -Schicht zu übermitteln;
von der MAC-Schicht Informationen über mindestens eine Dateneinheit aus der Vielzahl von Dateneinheiten zu empfangen;
die mindestens eine Dateneinheit an die MAC-Schicht zu übertragen.

12. Übertragungsende nach Anspruch 11, wobei, falls eine Anzahl der mindestens einen Dateneinheit zwei oder mehr beträgt, die mindestens eine Dateneinheit in einer von der PDCP-Schicht empfangenen Reihenfolge an die MAC-Schicht übertragen wird.

13. Übertragungsende nach Anspruch 11, wobei die mindestens eine Dateneinheit aus der Vielzahl von Dateneinheiten auf der Grundlage einer Uplink Gewährung und der Größen der Vielzahl von Dateneinheiten durch die MAC-Schicht ausgewählt wird.

14. Übertragungsende nach Anspruch 13, wobei die Vielzahl von Dateneinheiten mit Ausnahme der ausgewählten mindestens einen Dateneinheit in dem Speicher gehalten wird.

## Revendications

1. Procédé de transmission de signaux par une entité de contrôle d'accès au support, MAC, d'une extrémité de transmission dans un système de communication sans fil, le procédé consistant à:
recevoir, en provenance d'une couche supérieure, des informations concernant les tailles d'une pluralité d'unités de données de service, SDU, stockées dans la couche supérieure;
sélectionner au moins une SDU de la pluralité de SDU en tenant compte d'une attribution de liaison montante et des tailles des SDU;
transmettre des informations concernant l'au moins une SDU sélectionné à la couche supérieure;
recevoir l'au moins une SDU sélectionnée en provenance de la couche supérieure;
générer une unité de données de protocole, PDU, de MAC comprenant l'au moins une SDU sélectionnée; et
transmettre la MAC PDU à une extrémité de réception.

2. Procédé selon la revendication 1, dans lequel l'au moins une SDU sélectionnée est reçue sans ajout d'un en-tête par la couche supérieure et sans segmentation par la couche supérieure.

3. Procédé selon la revendication 1, dans lequel, si un nombre de l'au moins une SDU est deux ou plus, l'au moins une SDU sélectionnée est reçue en provenance de la couche supérieure dans un ordre reçu au niveau de la couche supérieure en provenance d'une couche de protocole de données par paquets, PDCP.

4. Extrémité de transmission (100) dans un système de communication sans fil, l'extrémité de transmission comprenant:
une mémoire (12); et
au moins un processeur (11) couplé à la mémoire (12) et configuré pour amener une entité de contrôle d'accès au support, MAC, de l'extrémité de transmission à:
recevoir, en provenance d'une couche supérieure, des informations concernant les tailles d'une pluralité d'unités de données de service, SDU, stockées dans la couche supérieure;
sélectionner au moins une SDU de la pluralité de SDU en tenant compte d'une attribution de liaison montante et des tailles des SDU;
transmettre des informations concernant l'au moins une SDU sélectionné à la couche supérieure;
recevoir l'au moins une SDU sélectionnée en provenance de la couche supérieure;
générer une unité de données de protocole, PDU, de MAC comprenant l'au moins une SDU sélectionnée; et
transmettre la MAC PDU à une extrémité de réception.

5. Extrémité de transmission selon la revendication 4, dans lequel l'au moins une SDU sélectionnée est reçue sans ajout d'un en-tête par la couche supérieure et sans segmentation par la couche supérieure.

6. Extrémité de transmission selon la revendication 4, dans lequel, si un nombre de l'au moins une SDU est deux ou plus, l'au moins une SDU sélectionnée est reçue en provenance de la couche supérieure dans un ordre reçu au niveau de la couche supérieure en provenance d'une couche de protocole de données par paquets, PDCP.

7. Procédé de transmission de signaux par une entité de contrôle de liaison radio, RLC, de mode transparent, TM, d'une extrémité de transmission dans un système de communication sans fil, le procédé consistant à
recevoir une pluralité d'unités de données en provenance d'une couche de protocole de convergence par paquets, PDCP;
stocker la pluralité d'unités de données dans une mémoire tampon;
transmettre, à une couche de contrôle d'accès au support, MAC, des informations concernant les tailles de la pluralité d'unités de données;
recevoir, en provenance de la couche MAC, des informations concernant au moins une unité de données parmi la pluralité d'unité de données;
transmettre, à la couche MAC, l'au moins une unité de données.

8. Procédé selon la revendication 7, dans lequel, si un nombre de l'au moins une SDU est deux ou plus, l'au moins une unité de données est transmise à la couche MAC dans un ordre reçu en provenance de la couche PDCP.

9. Procédé selon la revendication 7, dans lequel l'au moins une unité de données est une unité sélectionnée parmi la pluralité d'unités de données sur la base d'une attribution de liaison montante et des tailles de la pluralité des unités de données par la couche MAC.

10. Procédé selon la revendication 9, dans lequel la pluralité d'unités de données sauf pour l'au moins une unité de données sélectionnée sont conservées dans la mémoire tampon.

11. Extrémité de transmission (100) dans un système de communication sans fil, l'extrémité de transmission comprenant:
une mémoire (12); et
au moins un processeur (11) couplé à la mémoire (12) et configuré pour amener une entité de contrôle de liaison radio, RLC, de mode transparent, TM, de l'extrémité de transmission à:
recevoir une pluralité d'unités de données en provenance d'une couche de protocole de convergence par paquets, PDCP;
stocker la pluralité d'unités de données dans la mémoire;
transmettre, à une couche de contrôle d'accès au support, MAC, des informations concernant les tailles de la pluralité d'unités de données;
recevoir, en provenance de la couche MAC, des informations concernant au moins une unité de données parmi la pluralité d'unité de données;
transmettre, à la couche MAC, l'au moins une unité de données.

12. Extrémité de transmission selon la revendication 11, dans lequel, si un nombre de l'au moins une unité de données est deux ou plus, l'au moins une unité de données est transmise à la couche MAC dans un ordre reçu en provenance de la couche PDCP.

13. Extrémité de transmission selon la revendication 11, dans lequel l'au moins une unité de données est une unité sélectionnée parmi la pluralité d'unités de données sur la base d'une attribution de liaison montante et des tailles de la pluralité d'unités de données par la couche MAC.

14. Extrémité de transmission selon la revendication 13, dans lequel la pluralité d'unités de données sauf pour l'au moins une unité de données sélectionnée sont conservées dans la mémoire tampon.
